# EUROPÄISCHE PATENTSCHRIFT

(11) **EP 2 352 045 B1**
(45) Veröffentlichungstag und Bekanntmachung des Hinweises auf die Patenterteilung: **12.12.2018**
(21) Anmeldenummer: 11152522.6
(22) Anmeldetag: 28.01.2011
(51) Int. Cl.: G02B 6/00, F21V 8/00

(54) **Anordnung zur Lichtbeeinflussung mit einem Lichtleitelement und einem Reflektorelement**
Assembly for influencing light with a light guide element and a reflector element
Agencement doté d'un élément de guidage de la lumière et d'un élément réflecteur

(30) Priorität: 29.01.2010 DE 102010001359
(43) Veröffentlichungstag der Anmeldung: 03.08.2011
(73) Patentinhaber: Zumtobel Lighting GmbH, 6850 Dornbirn (AT)
(72) Erfinder: Ladstätter, Gerald, 6833, Klaus (AT); Schwärzler, Erich, 6941, Langenegg (AT)
(74) Vertreter: Thun, Clemens

(56) Entgegenhaltungen:
- EP-A1- 1 302 788
- WO-A1-2009/139380
- WO-A2-2009/072752
- DE-A1-102008 014 317
- US-A1- 2005 122 591
- US-A1- 2009 097 273
- US-B1- 6 518 691

## Beschreibung

Die Erfindung betrifft eine Anordnung zur Lichtbeeinflussung mit einem Lichtleitelement und einem Reflektorelement, ein Verfahren zur Herstellung einer solchen Anordnung, sowie eine Leuchte mit einer derartigen Anordnung.

Eine Anordnung zur Lichtbeeinflussung mit einem Lichtleitelement und einem Reflektorelement ist aus der DE 10 2008 014 317 A1 bekannt. Das Lichtleitelement ist dabei durch einen plattenförmigen Lichtleiter gebildet, so dass durch die Plattenform zwei große, parallele Seiten des Lichtleiters gebildet sind, im Folgenden als "Flachseiten" bezeichnet, die an ihren Rändern über "Schmalseiten" oder "Stirnseiten" des Lichtleiters verbunden sind. Bei der bekannten Anordnung wird über eine der Stirnseiten des Lichtleiters Licht in diesen eingestrahlt bzw. eingekoppelt und über eine der beiden Flachseiten abgegeben bzw. ausgekoppelt. Im Folgenden wird diejenige Flachseite, über die diese Lichtabgabe vorgesehen ist, auch als "Abstrahlseite" bezeichnet. Das Reflektorelement ist angrenzend an die der Abstrahlseite gegenüber liegenden Flachseite des Lichtleiters angeordnet, so dass Lichtstrahlen, die durch diese zuletzt genannte Flachseite den Lichtleiter verlassen, durch das Reflektorelement wieder in das Lichtleitelement zurückreflektiert werden. Im Folgenden wird die der Abstrahlseite gegenüberliegende Flachseite des Lichtleiters auch als "Reflektorseite" bezeichnet.

Auf der Reflektorseite des Lichtleiters ist eine Struktur mit linienförmigen Strukturelementen aufgedruckt, die dazu vorgesehen sind, auftreffende Lichtstrahlen derart zu streuen, dass das so gestreute Licht im weiteren Verlauf zumindest teilweise den Lichtleiter durch die Abstrahlseite verlassen kann. Lichtstrahlen, die zwischen diesen linienförmigen Strukturelementen auf die Reflektorseite treffen, werden in der Regel - wie bei einem Lichtleiter an sich üblich - totalreflektiert.

Gemäß dem Stand der Technik lässt sich die genannte Struktur auf der Reflektorseite des Lichtleiters mittels Lasergravur, Siebdruck oder Extrusionsprofil herstellen. Das Reflektorelement wird dann in einem folgenden Herstellungsschritt in einer Art "Sandwich" auf der Reflektorseite des Lichtleiters angebracht. Die Herstellung dieser Anordnung ist somit vergleichsweise aufwändig. Außerdem hat sich in der Praxis gezeigt, dass bei der bekannten Anordnung das Reflektorelement mit Bezug auf unterschiedliche Stellen der Reflektorseite derart unterschiedliche Abstände zu der Reflektorseite aufweisen kann, dass hierdurch unerwünschte optische Effekte entstehen.

Aus der US 6,518,691 ist eine flächenartige Licht emittierende Vorrichtung bekannt, in der eine Reflexionskomponente fest an einer transparenten Lichtleitkomponente befestigt werden kann.

Aus der US 2009/097273 ist eine Lichtleiterplatte mit einem transparenten Lichtleitersubstrat und einem mikrostrukturellen reflektierenden Film bekannt.

Der Erfindung liegt die Aufgabe zugrunde, eine Anordnung zur Lichtbeeinflussung mit einem Lichtleitelement und einem Reflektorelement anzugeben, die einfacher hergestellt werden kann und dabei besonders gute optische Eigenschaften aufweist. Außerdem soll ein Verfahren zur Herstellung einer solchen Anordnung sowie eine Leuchte mit einer solchen Anordnung angegeben werden.

Diese Aufgabe wird mit den in den unabhängigen Ansprüchen genannten Gegenständen gelöst. Besondere Ausführungsarten der Erfindung sind in den abhängigen Ansprüchen angegeben.

Gemäß einem ersten Aspekt der Erfindung ist eine Anordnung zur Lichtbeeinflussung vorgesehen, die ein Lichtleitelement und ein Reflektorelement aufweist, wobei das Lichtleitelement plattenförmig ist, so dass es eine erste Flachseite und eine, der ersten Flachseite gegenüberliegende, zweite Flachseite aufweist; die erste Flachseite weist dabei eine Struktur mit Strukturelementen auf, die dazu vorgesehen sind, auftreffende Lichtstrahlen derart zu streuen, dass das so gestreute Licht im weiteren Verlauf zumindest teilweise das Lichtleitelement durch die zweite Flachseite verlassen kann. Das Reflektorelement ist an die erste Flachseite des Lichtleitelements angrenzend angeordnet. Weiterhin ist das Reflektorelement mit dem Lichtleitelement über Verbindungsstellen verbunden, wobei die Verbindungsstellen derart gestaltet sind, dass sie die Strukturelemente bilden. Außerdem ist auch noch vorgesehen, dass die Strukturelemente durch eine Farbschicht gebildet sind und dass ein Schutzlack das Reflektorelement bildet, wobei zwischen der Farbschicht und dem Lichtleitelement eine Klebeschicht angeordnet ist.

Auf diese Weise können die Strukturelemente und die Verbindungsstellen in nur einem Herstellungsschritt gefertigt werden, so dass sich die Anordnung leichter herstellen lässt. Außerdem lässt sich durch die so gebildeten Verbindungsstellen das Reflektorelement derart lagedefiniert relativ zu der ersten Flachseite des Lichtleitelements anordnen, dass die Gefahr von unerwünschten optischen Effekten, hervorgerufen durch entsprechende Variabilitäten des ortsabhängigen Abstands zwischen dem Reflektorelement und dem Lichtleitelement, vermindert ist.

Vorteilhaft sind die Strukturelemente linienförmig und/oder punktförmig. Weiterhin vorteilhaft sind die Strukturelemente auf der ersten Flachseite derart angeordnet, dass ihre Dichte mit zunehmendem Abstand von einem Randbereich der ersten Flachseite zunimmt. Auf diese Weise lässt sich eine besonders gleichmäßige Abstrahlung von Licht durch die zweite Flachseite des Lichtleitelements erzielen.

Besonders gut eignet sich die Anordnung als Bestandteil einer Leuchte, wenn eine der Stirnseiten des Lichtleitelements zur Einkopplung von Licht vorgesehen ist.

Vorzugsweise ist die erste Flachseite viereckig, wobei die Strukturelemente linienförmig und parallel zu Seitenkanten der ersten Flachseite verlaufend ausgebildet sind.

Gemäß einem zweiten Aspekt der Erfindung ist ein Verfahren zur Herstellung einer Anordnung zur Lichtbeeinflussung vorgesehen, die ein Lichtleitelement und ein Reflektorelement aufweist, wobei das Lichtleitelement plattenförmig ist, so dass es eine erste Flachseite und eine, der ersten Flachseite gegenüberliegende, zweite Flachseite aufweist; die erste Flachseite weist dabei eine Struktur mit Strukturelementen auf, die dazu vorgesehen sind, auftreffende Lichtstrahlen derart zu streuen, dass das so gestreute Licht im weiteren Verlauf zumindest teilweise das Lichtleitelement durch die zweite Flachseite verlassen kann. Das Reflektorelement ist an die erste Flachseite des Lichtleitelements angrenzend angeordnet. Das Verfahren weist den folgenden Schritt auf: Verbinden des Reflektorelements mit dem Lichtleitelement über Verbindungsstellen, wobei die Verbindungsstellen derart gestaltet werden, dass sie die Strukturelemente bilden, und wobei die Verbindungsstellen durch Heißprägen gebildet werden. Außerdem ist vorgesehen, dass die Strukturelemente durch eine Farbschicht gebildet sind und dass ein Schutzlack das Reflektorelement bildet, wobei zwischen der Farbschicht und dem Lichtleitelement eine Klebeschicht angeordnet ist und wobei vor dem Schritt des Verbindens an einer Trägerfolie eine Trennschicht als erste Schicht, der Schutzlack als zweite Schicht, die Farbschicht als dritte Schicht und die Klebeschicht als vierte Schicht angeordnet sind und nach dem Schritt des Verbindens der Schutzlack, die Farbschicht und die Klebeschicht auf dem Lichtleitelement verbleiben.

Gemäß einem dritten Aspekt der Erfindung ist eine Leuchte mit einer erfindungsgemäßen Anordnung vorgesehen. Vorzugsweise ist dabei eine der Stirnseiten des Lichtleitelements zur Einkopplung von Licht vorgesehen, wobei die Leuchte weiterhin ein Leuchtmittel zur Einkopplung des Lichts in die Stirnseite des Lichtleitelements aufweist.

Die Erfindung wird im Folgenden anhand eines Ausführungsbeispiels und mit Bezug auf die Zeichnungen näher erläutert. Es zeigen:
- Fig. 1: eine Teilquerschnittskizze zu einem Ausführungsbeispiel einer erfindungsgemäßen Anordnung,
- Fig. 2: eine Teilquerschnittskizze zum Stand der Technik,
- Fig. 3: eine Teilquerschnittskizze zu einer erfindungsgemäßen Leuchte und
- Fig. 4: eine Skizze zur Technik des Heißprägens.

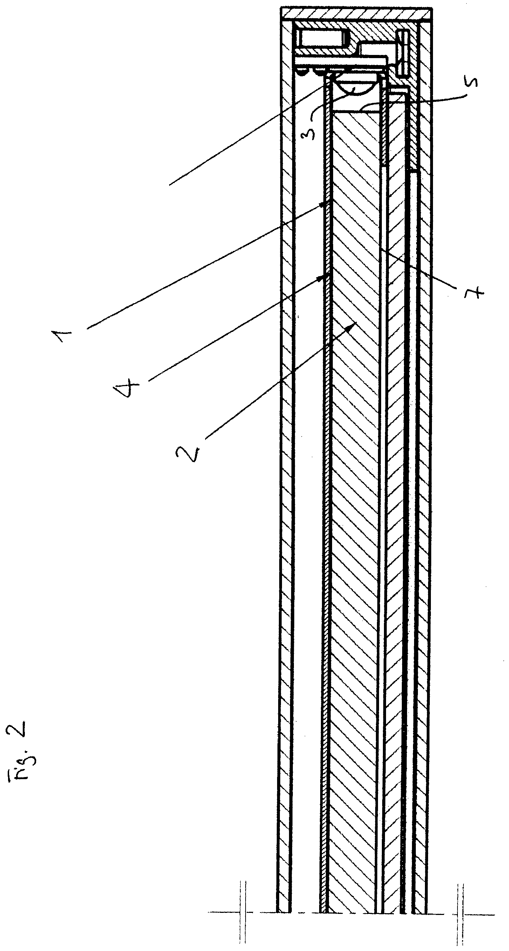

Fig. 2 zeigt eine Skizze zu einem Teilquerschnitt einer Anordnung zur Lichtbeeinflussung, die ein Lichtleitelement 2 und ein Reflektorelement 4 aufweist. Die hier skizzierte Anordnung ist an sich insoweit aus dem Stand der Technik bekannt, als es die grundsätzliche Wechselwirkung zwischen dem Lichtleitelement 2 und dem Reflektorelement 4 betrifft. Das Lichtleitelement 2 ist plattenförmig, so dass es eine erste Flachseite 1 und eine dazu parallele und gegenüberliegende zweite Flachseite 7 aufweist. Die beiden Flachseiten 1, 7 sind über Stirnseiten verbunden, wobei in der Skizze der Fig. 2 aufgrund der Teilquerschnittdarstellung lediglich eine Stirnseite 5 dargestellt ist.

Die in Fig. 2 skizzierte Anordnung kann einen Teil einer Leuchte darstellen, wobei die Leuchte ein Leuchtmittel bzw. eine Lichtquelle 3 aufweist, die benachbart zu der Stirnseite 5 angeordnet ist, so dass Licht, das von der Lichtquelle 3 abgegeben wird, über die Stirnseite 5 in das Lichtleitelement 2 einstrahlt, also über die Stirnseite 5 "eingekoppelt" wird. Bei der Lichtquelle 3 kann es sich beispielswiese um eine LED (lichtemittierende Diode) bzw. mehrere LEDs handeln, die längs der Stirnseite 5 in einer Reihe angeordnet sind. Das so in das Lichtleitelement 2 eingestrahlte Licht wird im Weiteren durch die Anordnung beeinflusst und verlässt anschließend - zumindest teilweise - das Lichtleitelement 2 wieder, und zwar über die zweite Flachseite 7.

Das Reflektorelement 4 ist angrenzend an die erste Flachseite 1 des Lichtleiters 2 angeordnet, so dass Lichtstrahlen, die von der Lichtquelle 3 stammend aus dem Inneren des Lichtleiters 2 kommend die erste Flachseite 1 durchsetzen, von dem Reflektorelement 4 wieder in das Lichtleitelement 2 zurückreflektiert werden, und zwar wieder über die erste Flachseite 1.

Auf der ersten Flachseite 1 des Lichtleiters 2 ist eine (in Fig. 2 nicht dargestellte) Struktur mit beispielsweise linienförmigen Strukturelementen aufgedruckt. Diese Strukturelemente sind dazu vorgesehen sind, Lichtstrahlen, die von der Lichtquelle 3 stammend und anschließend durch das Innere des Lichtleiters 2 verlaufend auf die Strukturelemente auftreffen, derart zu streuen, dass das so gestreute Licht im weiteren Verlauf zumindest teilweise den Lichtleiter 2 durch die zweite Flachseite 7 verlassen kann. Lichtstrahlen, die zwischen den linienförmigen Strukturelementen auf die erste Flachseite 1 auftreffen, werden grundsätzlich - wie bei einem Lichtleiter an sich üblich - totalreflektiert.

Die Herstellung der Anordnung erfolgt gemäß dem Stand der Technik in zwei Schritten. In einem ersten Schritt wird die genannte Struktur mit den Strukturelementen auf die erste Flachseite 1 aufgebracht, und zwar durch Aufdrucken, und in einem folgenden Schritt wird dann das Reflektorelement 4 auf der ersten Flachseite 1 des Lichtleitelements 2 angeordnet.

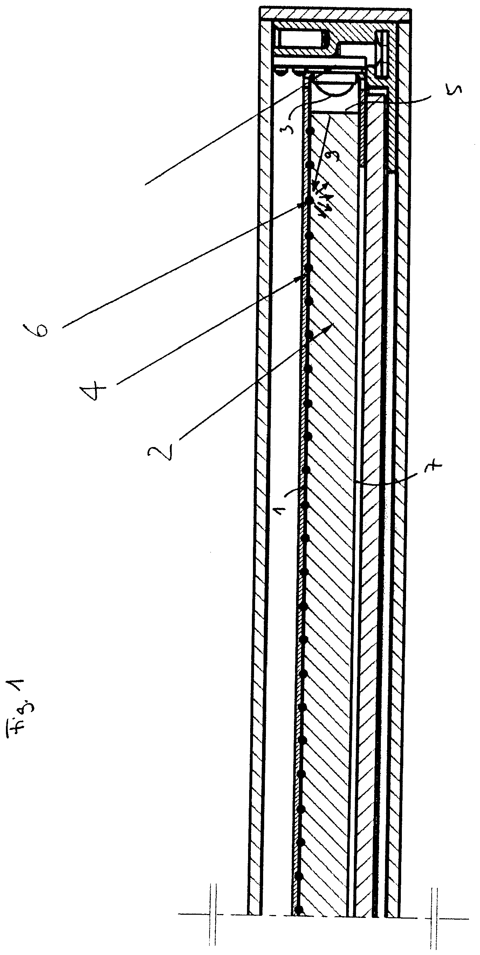

In Fig. 1 ist demgegenüber eine erfindungsgemäße Anordnung skizziert. Soweit nicht anders angegeben, gelten die obigen Ausführungen mit Bezug auf die in Fig. 2 skizzierte Anordnung auch für Fig. 1. Die Bezugszeichen sind analog verwendet.

Die erfindungsgemäße Anordnung unterscheidet sich von der Anordnung gemäß Fig. 2 darin, dass das Reflektorelement 4 mit dem Lichtleitelement 2 über Verbindungsstellen verbunden ist, wobei die Verbindungsstellen derart gestaltet sind, dass sie Strukturelemente - in Fig. 1 mit dem Bezugszeichen 6 bezeichnet - einer Struktur auf der ersten Flachseite 1 bilden, so dass die so gebildeten Strukturelemente 6 die entsprechende Funktion der oben beschriebenen, bekannten, aufgedruckten Strukturelemente erfüllen. Die Strukturelemente 6 sind also Strukturelemente 6 einer Struktur und sind dazu ausgebildet, auf sie treffende Lichtstrahlen so zu streuen, dass das so gestreute Licht im weiteren Verlauf zumindest teilweise das Lichtleitelement 2 über die zweite Flachseite 7 verlassen kann. Ein entsprechend auftreffender Lichtstrahl ist in Fig. 1 exemplarisch durch einen langen Pfeil angedeutet und mit dem Bezugszeichen 9 versehen. Wie weiterhin durch mehrere kleine Pfeile angedeutet, können insbesondere die Strukturelemente 6 derart ausgebildet sein, dass sie auftreffende Lichtstrahlen 9 diffus in das Innere des Lichtleitelements 2 streuen.

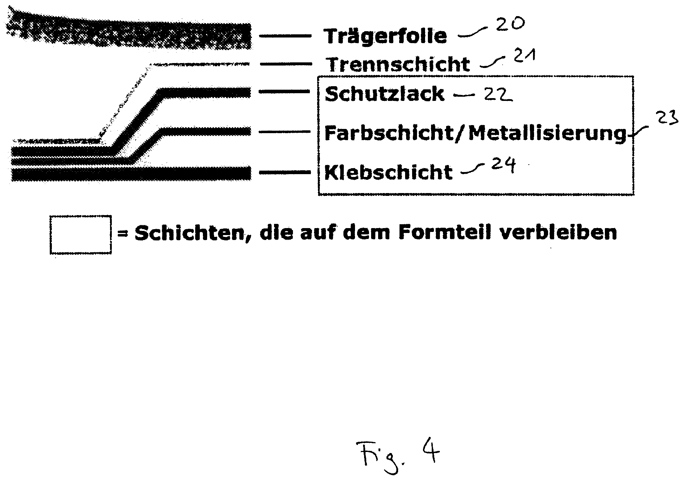

Die Verbindungsstellen sind erfindungsgemäß durch Heißprägen gebildet. Die Technik des Heißprägens ist an sich bekannt. In Fig. 4 ist eine Skizze hierzu dargestellt, die einen Teilquerschnitt durch eine Trägerfolie 20 mit mehreren Schichten zeigt. Dabei stellt eine - von der Trägerfolie 20 aus gezählt - erste Schicht 21 eine Trennschicht dar, eine zweite Schicht 22 einen Schutzlack, eine dritte Schicht 23 eine Farbschicht und eine vierte Schicht 24 eine Klebeschicht. Die Schichten 22, 23 und 24 sind dafür vorgesehen, auf dem entsprechenden Teil zu verbleiben, auf dem sie durch Heißprägen aufgebracht werden. Bei Übertragung dieser Technik auf die erfindungsgemäße Anordnung kann vorgesehen sein, dass die "Farbschicht" 23 die Funktion der Bildung der Strukturelemente 6 erfüllt, indem sie mit dem Lichtleitelement 2 an entsprechend vordefinierten Klebestellen durch den Prägevorgang verbunden wird, so dass diese Klebestellen dann die Strukturelemente 6 darstellen. Der "Schutzlack" 22 kann dem Reflektorelement 4 entsprechen.

Die Verbindungsstellen können - alternativ oder ergänzend - aber nicht erfindungsgemäß auch durch Ultraschallschweißen gebildet sein, wobei die "Schweißnähte" die Verbindungsstellen bzw. die Strukturelemente 6 bilden. Diese Technik ist an sich bekannt und wird daher hier nicht näher dargestellt.

Weiterhin können die Verbindungsstellen - bei entsprechender Materialpaarung - aber nicht erfindungsgemäß auch durch Reibschweißen (oder Vibrationsschweißen) oder Laserschweißen gebildet sein. Auch diese Techniken sind an sich bekannt.
Die Strukturelemente 6 bzw. Verbindungsstellen können beispielswiese linienförmig und/oder punktförmig sein. Insbesondere sind die Strukturelemente 6 nicht flächendeckend, sondern lediglich an bestimmten Stellen der ersten Flachseite 1 vorgesehen, also lediglich "partiell". Zur Einkopplung von Licht kann eine der Stirnseiten des Lichtleitelements 2 vorgesehen sein; es können auch mehrere oder alle Stirnseiten des Lichtleitelements 2 zur Einkopplung von Licht vorgesehen sein.

Die Dichte der Strukturelemente 6 auf der ersten Flachseite 1 kann dabei insbesondere in Abhängigkeit der gewünschten Lichtauskopplung aus dem Lichtleitelement 2 bzw. der gewünschten Helligkeitsverteilung gewählt werden. Ist beispielsweise eine über die zweite Flachseite 7 im Wesentlichen gleichmäßig helle Lichtabgabe erwünscht, können die Strukturelemente 6 hierzu derart angeordnet sein, dass ihre Dichte mit zunehmendem Abstand von demjenigen Randbereich der ersten Flachseite 1 zunimmt, an den eine Stirnseite grenzt, über die die Einkopplung von Licht vorgesehen ist. Ist die erste Flachseite 1 beispielsweise viereckig und eine Einkopplung von Licht entlang aller entsprechenden vier Stirnseiten vorgesehen, so können die Strukturelemente 6 viereckig sein, wobei ihre entsprechenden Seiten parallel verlaufend zu den vier Stirnseiten bzw. Seitenkanten der ersten Flachseite 1 ausgebildet sind und ihre Dichte zur Mitte der ersten Flachseite 1 hin zunimmt.

Allerdings kann auch eine andersartige Helligkeitsverteilung gewünscht sein. Hierzu kann beispielsweise vorgesehen sein, dass die Strukturelemente 6 - wie in Fig. 1 angedeutet - äquidistant bzw. in gleichmäßiger Dichte über die erste Flachseite 1 angeordnet sind. In diesem Fall ist zu erwarten, dass die Helligkeit mit zunehmendem Abstand von demjenigen Randbereich der ersten Flachseite 1 abnimmt, längs dem die Lichteinkopplung vorgesehen ist.

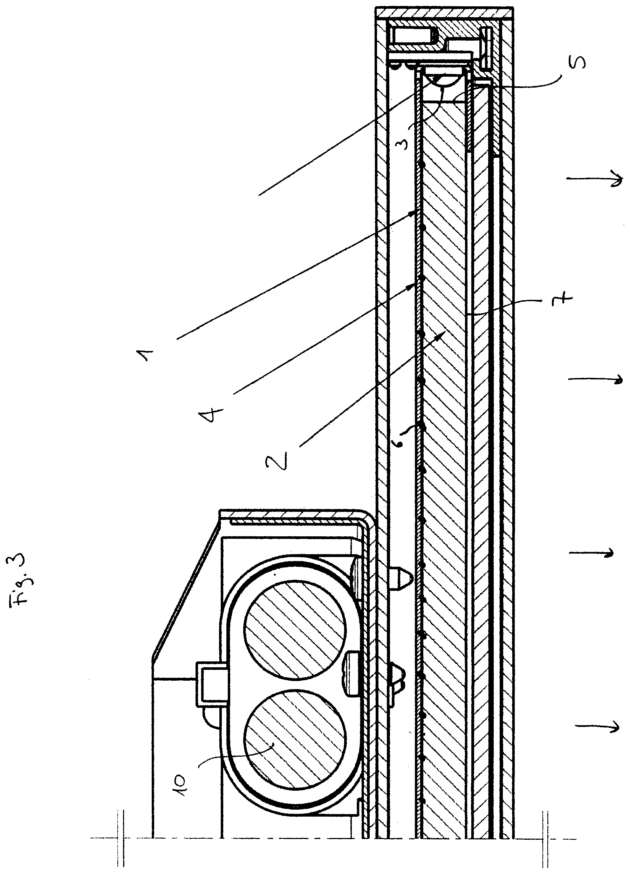

Wie in Fig. 3 angedeutet, kann die erfindungsgemäße Anordnung Bestandteil einer Leuchte bilden. Beispielsweise kann eine Pendelleuchte vorgesehen sein, bei der die erfindungsgemäße Anordnung zur Abgabe von Licht nach unten - also zur Erzeugung einer Direktbeleuchtung - vorgesehen ist, wie in Fig. 3 durch die Pfeile angedeutet. Die Lichtquelle 3 ist dabei weiteres Bestandteil der Leuchte und dient zur Einkopplung von Licht durch die Stirnseite 5 des Lichtleitelements 2. Die Einkopplung und dementsprechend die Lichtquelle 3 kann dabei über alle Stirnseiten des Lichtleitelements 2 vorgesehen sein oder nur über eine oder einen Teil der Stirnseiten. Zur Erzeugung einer Indirektbeleuchtung bzw. einer Lichtabgabe nach oben kann eine weitere Lichtquelle 10 vorgesehen sein.

## Patentansprüche

1. Anordnung zur Lichtbeeinflussung, aufweisend
- ein Lichtleitelement (2) und
- ein Reflektorelement (4),
wobei das Lichtleitelement (2) plattenförmig ist, so dass es eine erste Flachseite (1) und eine, der ersten Flachseite (1) gegenüberliegende, zweite Flachseite (7) aufweist,
wobei die erste Flachseite (1) eine Struktur mit Strukturelementen (6) aufweist, die dazu vorgesehen sind, auftreffende Lichtstrahlen (9a) derart zu streuen, dass das so gestreute Licht im weiteren Verlauf zumindest teilweise das Lichtleitelement (2) durch die zweite Flachseite (7) verlassen kann,
wobei das Reflektorelement (4) an die erste Flachseite (1) des Lichtleitelements (2) angrenzend angeordnet ist und das Reflektorelement (4) mit dem Lichtleitelement (2) über Verbindungsstellen verbunden ist, wobei die Verbindungsstellen derart gestaltet sind, dass sie die Strukturelemente (6) bilden,
**dadurch gekennzeichnet,**
**dass** die Strukturelemente (6) durch eine Farbschicht (23) gebildet sind und dass ein Schutzlack (22) das Reflektorelement (4) bildet, wobei zwischen der Farbschicht (23) und dem Lichtleitelement (2) eine Klebeschicht (24) angeordnet ist.

2. Anordnung nach Anspruch 1,
bei der die Strukturelemente (6) linienförmig und/oder punktförmig sind.

3. Anordnung nach einem der vorhergehenden Ansprüche,
bei der die Strukturelemente (6) auf der ersten Flachseite (1) derart angeordnet sind, dass ihre Dichte mit zunehmendem Abstand von einem Randbereich der ersten Flachseite (1) zunimmt.

4. Anordnung nach einem der vorhergehenden Ansprüche,
wobei eine der Stirnseiten des Lichtleitelements (2) zur Einkopplung von Licht vorgesehen ist.

5. Anordnung nach einem der vorhergehenden Ansprüche,
bei der die erste Flachseite (1) des Lichtleitelements (2) viereckig ist und die Strukturelemente (6) linienförmig und parallel zu Seitenkanten der ersten Flachseite (1) verlaufend ausgebildet sind.

6. Verfahren zur Herstellung einer Anordnung zur Lichtbeeinflussung, aufweisend
- ein Lichtleitelement (2) und
- ein Reflektorelement (4),
wobei das Lichtleitelement (2) plattenförmig ist, so dass es eine erste Flachseite (1) und eine, der ersten Flachseite (1) gegenüberliegende, zweite Flachseite (7) aufweist,
wobei die erste Flachseite (1) eine Struktur mit Strukturelementen (6) aufweist, die dazu vorgesehen sind, auftreffende Lichtstrahlen (9) derart zu streuen, dass das so gestreute Licht im weiteren Verlauf zumindest teilweise das Lichtleitelement (2) durch die zweite Flachseite (7) verlassen kann,
wobei das Reflektorelement (4) an die erste Flachseite (1) des Lichtleitelements (2) angrenzend angeordnet ist,
wobei das Verfahren den folgenden Schritt aufweist:
Verbinden des Reflektorelements (4) mit dem Lichtleitelement (2) über Verbindungsstellen, wobei die Verbindungsstellen derart gestaltet werden, dass sie die Strukturelemente (6) bilden, und wobei die Verbindungsstellen durch Heißprägen gebildet werden,
**dadurch gekennzeichnet,**
**dass** die Strukturelemente (6) durch eine Farbschicht (23) gebildet sind und dass ein Schutzlack (22) das Reflektorelement (4) bildet, wobei zwischen der Farbschicht (23) und dem Lichtleitelement (2) eine Klebeschicht (24) angeordnet ist und
wobei vor dem Schritt des Verbindens an einer Trägerfolie (20) eine Trennschicht (21) als erste Schicht, der Schutzlack (22) als zweite Schicht, die Farbschicht (23) als dritte Schicht und die Klebeschicht (24) als vierte Schicht angeordnet sind und nach dem Schritt des Verbindens der Schutzlack (22), die Farbschicht (23) und die Klebeschicht (24) auf dem Lichtleitelement (2) verbleiben.

7. Leuchte, aufweisend
eine Anordnung nach einem der Ansprüche 1 bis 5.

8. Leuchte, aufweisend
eine Anordnung nach Anspruch 4,
sowie ein Leuchtmittel (3) zur Einkopplung des Lichts in die Stirnseite (5) des Lichtleitelements (2).

## Claims

1. An arrangement for light influencing, having
- a light-guiding element (2) and
- a reflector element (4),
wherein the light-guiding element (2) is plate-shaped, so that it has a first flat side (1) and a second flat side (7) opposite the first flat side (1),
wherein the first flat side (1) has a structure with structural elements (6), which are provided to diffuse incident light beams (9a) in such a manner that the thus diffused light can in the further course at least partially leave the light-guiding element (2) through the second flat side (7),
wherein the reflector element (4) is arranged adjacent to the first flat side (1) of the light-guiding element (2) and the reflector element (4) is connected to the light-guiding element (2) via connecting points, wherein the connecting points are designed in such a manner that they form structural elements (6),
**characterized in**
**that** the structural elements (6) are formed by a color layer (23) and that a protective lacquer (22) forms the reflector element (4), wherein an adhesive layer (24) is arranged between the color layer (23) and the light-guiding element (2).

2. An arrangement according to Claim 1,
in which the structural elements (6) are linear and/or punctiform.

3. An arrangement according to any one of the preceding claims,
in which the structural elements (6) are arranged on the first flat side (1) in such a manner that their thickness increases with increasing distance from an edge area of the first flat side (1).

4. An arrangement according to any one of the preceding claims,
wherein one of the end faces of the light-guiding element (2) is provided for coupling light.

5. An arrangement according to any one of the preceding claims,
in which the first flat side (1) of the light-guiding element (2) is quadrangular and the structural elements (6) are designed linear and extending parallel to the side edges of the first flat side (1).

6. A method for the production of an arrangement for light influencing, having
- a light-guiding element (2) and
- a reflector element (4),
wherein the light-guiding element (2) is plate-shaped, so that it has a first flat side (1) and a second flat side (7) opposite the first flat side (1),
wherein the first flat side (1) has a structure with structural elements (6), which are provided to diffuse incident light beams (9) in such a manner that the thus diffused light can in the further course at least partially leave the light-guiding element (2) through the second flat side (7),
wherein the reflector element (4) is arranged adjacent to the first flat side (1) of the light-guiding element (2),
wherein the method has the following step:
Connection of the reflector element (4) to the light-guiding element (2) via connecting points, wherein the connecting points are designed in such a manner that they form structural elements (6), and wherein the connecting points are formed by hot stamping,
**characterized in**
**that** the structural elements (6) are formed by a color layer (23) and that a protective lacquer (22) forms the reflector element (4), wherein an adhesive layer (24) is arranged between the color layer (23) and the light-guiding element (2) and
wherein before the step of connection a separating layer (21) as the first layer, the protective lacquer (22) as the second layer, the color layer (23) as the third layer and the adhesive layer (24) as the fourth layer are arranged on a carrier film (20) and after the step of connection the protective lacquer (22), the color layer (23) and the adhesive layer (24) remain on the light-guiding element (2).

7. A luminaire, having
an arrangement according to any one of Claims 1 to 5.

8. A luminaire, having
an arrangement according to Claim 4,
as well as a lighting means (3) for coupling light into the end face (5) of the light- element (2).

## Revendications

1. Agencement d'influence lumineuse, comportant
- un élément de guidage de la lumière (2) et
- un élément de réflecteur (4),
l'élément de guidage de la lumière (2) étant en forme de plaque de telle sorte qu'il comporte un premier côté plat (1) et un deuxième côté plat (7) opposé au premier côté plat (1),
le premier côté plat (1) comportant une structure avec des éléments de structure (6) qui sont prévus pour diffuser des rayons lumineux (9a) incidents de telle sorte que la lumière ainsi diffusée peut, dans la suite de son parcours, quitter au moins partiellement l'élément de guidage de la lumière (2) à travers le deuxième côté plat (7),
l'élément de réflecteur (4) étant disposé de façon contiguë au premier côté plat (1) de l'élément de guidage de la lumière (2), et l'élément de réflecteur (4) étant raccordé à l'élément de guidage de la lumière (2) par le biais de points de raccordement, les points de raccordement étant conçus de telle sorte qu'ils forment les éléments de structure (6),
**caractérisé en ce que**
les éléments de structure (6) sont formés par une couche de couleur (23) et **en ce qu'**une laque de protection (22) forme l'élément de réflecteur (4), une couche de colle (24) étant disposée entre la couche de couleur (23) et l'élément de guidage de la lumière (2).

2. Agencement selon la revendication 1,
dans lequel les éléments de structure (6) sont linéaires et/ou ponctuels.

3. Agencement selon l'une des revendications précédentes,
dans lequel les éléments de structure (6) sont disposés sur le premier côté plat (1) de telle sorte que leur densité augmente quand la distance à une zone de bord du premier côté plat (1) augmente.

4. Agencement selon l'une des revendications précédentes,
un des côtés frontaux de l'élément de guidage de la lumière (2) étant prévu pour l'injection de lumière.

5. Agencement selon l'une des revendications précédentes,
dans lequel le premier côté plat (1) de l'élément de guidage de la lumière (2) est quadrangulaire et les éléments de structure (6) sont constitués de façon linéaire et parallèle aux arêtes latérales du premier côté plat (1).

6. Procédé de fabrication d'un agencement d'influence lumineuse, comportant
- un élément de guidage de la lumière (2) et
- un élément de réflecteur (4),
l'élément de guidage de la lumière (2) étant en forme de plaque de telle sorte qu'il comporte un premier côté plat (1) et un deuxième côté plat (7) opposé au premier côté plat (1),
le premier côté plat (1) comportant une structure avec des éléments de structure (6) qui sont prévus pour diffuser des rayons lumineux (9) incidents de telle sorte que la lumière ainsi diffusée peut, dans la suite de son parcours, quitter au moins partiellement l'élément de guidage de la lumière (2) à travers le deuxième côté plat (7),
l'élément de réflecteur (4) étant disposé de façon contiguë au premier côté plat (1) de l'élément de guidage de la lumière (2),
le procédé comportant l'étape suivante :
raccordement de l'élément de réflecteur (4) à l'élément de guidage de la lumière (2) par le biais de points de raccordement, les points de raccordement étant conçus de telle sorte qu'ils forment les éléments de structure (6), et les points de raccordement étant formés par estampage à chaud,
**caractérisé en ce que**
les éléments de structure (6) sont formés par une couche de couleur (23) et **en ce qu'**une laque de protection (22) forme l'élément de réflecteur (4), une couche de colle (24) étant disposée entre la couche de couleur (23) et l'élément de guidage de la lumière (2) et,
avant l'étape de raccordement, il est disposé sur une feuille de support (20) une couche de séparation (21) en tant que première couche, la laque de protection (22) en tant que deuxième couche, la couche de couleur (23) en tant que troisième couche et la couche de colle (24) en tant que quatrième couche et, après l'étape du raccordement de la laque de protection (22), la couche de couleur (23) et la couche de colle (24) demeurant sur l'élément de guidage de la lumière (2).

7. Luminaire, comportant
un agencement selon l'une des revendications 1 à 5.

8. Luminaire, comportant
un agencement selon la revendication 4,
ainsi qu'un moyen d'éclairage (3) pour l'injection de la lumière dans le côté frontal (5) de l'élément de guidage de la lumière (2).
